(19) Europäisches Patentamt
European Patent Office
Office européen des brevets

(11) **EP 2 811 002 B1**

(12) **EUROPEAN PATENT SPECIFICATION**

(45) Date of publication and mention of the grant of the patent:
**16.03.2016 Bulletin 2016/11**

(51) Int Cl.:
***C09K 11/77*** *(2006.01)*

(21) Application number: **14170893.3**

(22) Date of filing: **03.06.2014**

(54) **PHOTOLUMINESCENT MATERIAL WITH LONG AFTERGLOW, BASED ON YTTERBIUM DOPED GADOLINIUM OXYCARBONATE AND THEIR MANUFACTURE**

PHOTOLUMINESZENTES MATERIAL MIT LANGER NACHLEUCHTZEIT, BASIEREND AUF EINEM YTTERBIUM DOTIERTEN GADOLINIUM OXYCARBONAT UND DEREN HERSTELLUNG

MATÉRIAU PHOTOLUMINESCENT À REMANENCE DE LONGUE DURÉE, À BASE D'UN GADOLINIUM OXYCARBONATE DOTÉ D'YTTERBIUM ET PROCÉDÉS POUR LEUR FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2013 IT MI20130908**

(43) Date of publication of application:
**10.12.2014 Bulletin 2014/50**

(73) Proprietors:
- **UNIVERSITA DEGLI STUDI DI GENOVA**
  **16126 Genova (IT)**
- **Università degli Studi di Milano - Bicocca**
  **20126 Milano (IT)**

(72) Inventors:
- **Costa, Giorgio Andrea**
  **16136 Genova (IT)**
- **Martini, Marco**
  **20136 Milano (IT)**
- **Gianotti, Enrica**
  **10143 Torino (IT)**
- **Caratto, Valentina**
  **16143 Genova (IT)**
- **Locardi, Federico**
  **16154 Genova (IT)**
- **Masini, Roberto**
  **16137 Genova (IT)**
- **Franceschi, Enrico**
  **16122 Genova (IT)**
- **Artini, Cristina**
  **16143 Genova (IT)**
- **Fasoli, Mauro**
  **20882 Bellusco (IT)**
- **Panzeri, Laura**
  **23899 Robbiate (IT)**
- **Bottinelli, Emanuela Diana**
  **10138 Torino (IT)**
- **Miletto, Ivana**
  **10022 Carmagnola (IT)**

(74) Representative: **Palladino, Saverio Massimo et al**
**Notarbartolo & Gervasi S.p.A.**
**Corso di Porta Vittoria, 9**
**20122 Milano (IT)**

(56) References cited:
**GB-A- 1 344 451**

- **DATABASE INSPEC [Online] THE INSTITUTION OF ELECTRICAL ENGINEERS, STEVENAGE, GB; 30 June 2010 (2010-06-30), KAMINSKA A ET AL: "Spectroscopy of gadolinium gallium garnet crystals doped with Yb<3+> revisited", XP002713689, Database accession no. 11362050 & JOURNAL OF PHYSICS: CONDENSED MATTER IOP PUBLISHING LTD. UK, vol. 22, no. 25, 30 June 2010 (2010-06-30) , ISSN: 0953-8984, DOI: 10.1088/0953-8984/22/25/255501**

- DATABASE INSPEC [Online] THE INSTITUTION OF ELECTRICAL ENGINEERS, STEVENAGE, GB; February 2013 (2013-02), ZHEN LIU ET AL: "Long-circulating Gd2O3:Yb<3+>, Er<3+> up-conversion nanoprobes as high-performance contrast agents for multi-modality imaging", XP002713604, Database accession no. 13701978 & BIOMATERIALS ELSEVIER SCIENCE LTD. UK, vol. 34, no. 6, February 2013 (2013-02), pages 1712-1721, ISSN: 0142-9612, DOI: 10.1016/J.BIOMATERIALS.2012.11.009
- YANG L ET AL: "Nonlinear blue upconversion luminescence in Gd2O3: Er<3+>/Yb<3+> nanowires", SOLID STATE COMMUNICATIONS, PERGAMON, GB, vol. 149, no. 41-42, 15 July 2009 (2009-07-15), pages 1814-1817, XP026584972, ISSN: 0038-1098, DOI: 10.1016/J.SSC.2009.07.013 [retrieved on 2009-07-15]
- VILAS G. POL ET AL: "Synthesis of New Red-Emitting Single-Phase Europium Oxycarbonate", INORGANIC CHEMISTRY, vol. 48, no. 12, 15 June 2009 (2009-06-15) , pages 5569-5573, XP055143648, ISSN: 0020-1669, DOI: 10.1021/ic900290b

**Description**

**Field of the invention**

The present invention relates to a photoluminescent material with emission wavelengths in the near infrared (NIR), as well as to methods of preparation thereof.

**Prior art**

Photoluminescent materials (or, commonly, also "phosphors") are all the materials that emit electromagnetic radiation in response to an excitation in turn electromagnetic, normally of higher energy (and therefore having higher frequency and lower wavelength) than that of the emitted radiation.

Photoluminescence is due to the return of the electrons initially excited by the incident radiation to their ground state, resulting in the release of energy through the emission of a photon. The mechanisms involved in this phenomenon are of various types and occur on different time scales; in some cases, the return to the ground state requires times in the order of nanoseconds or tens of nanoseconds, so that to the observer's eye, the phenomenon is interrupted as soon as the excitation ceases; in other cases, on the other hand, the process of decay of the electrons to the ground state goes through "forbidden" transitions and that occur with a low frequency, so that the luminescence due to the phenomenon can last for seconds, minutes or even hours after the interruption of the excitation. Traditionally, the photoluminescence which ceased immediately after the interruption of the excitation was called "fluorescence", while the photoluminescence persistent after the interruption of the excitation was called "phosphorescence"; this distinction is not, however, considered to be current anymore, and nowadays it is preferred to refer to the persistence of luminescence. These materials are of interest for applications in many fields, such as for example in optoelectronics and, especially, in the field of bio-imaging for diagnostic purposes; given the particular importance of the latter application, the remainder of the description will be referred to bio-imaging, but the phosphors of the invention are of general applicability in all uses known for this type of materials.

In the field of bio-imaging, particularly interesting are the phosphors capable of emitting in the near infrared (NIR), especially at wavelengths in the range between approximately 800 and 1200 nanometers (nm), because the body's tissues and in particular the skin are transparent to this radiation, and therefore a signal of wavelength in this range emitted by a source under the skin can be easily detected and measured with suitable instrumentation, enabling the development of non-invasive diagnostic methods.

The use of phosphors that emit in the NIR as markers of receptors present on cells subject to diagnostic tests is the subject of wide technical and patent literature.

Patent application US 2012/0258048 A1 provides a general description of bio-imaging methods with photoluminescent sources, in this case consisting of relatively complex organic compounds. The problem of organic phosphors, despite being extremely versatile, is that they undergo interactions with the surrounding tissues that lead to a quick "quenching" of the photoluminescent emission signal. Among the inorganic phosphors, the most interesting ones from the application point of view are those based on rare earths, which give rise to the best luminescence yield.

Patent application WO 2008/022147 A1 describes nanoparticles of lanthanide hydroxides, in particular "nanorods" of europium hydroxide, for use in medical diagnostics.

Patent application WO 2010/075003 A1 describes complexes with emission in the NIR consisting of a suitably chelated lanthanide ion.

Pol et al (Inorg. Chem. 2009, 48, 5569-5573) discloses europium doped oxycarbonates.

The article of R. Osaki et al., published in the Proceedings of the IEEE SENSORS 2011 conference, pages 1784-1787, describes a system for the diagnosis of breast cancer that uses as phosphors nanoparticles of yttrium oxide doped with ytterbium and erbium.

The article "In vivo optical imaging with rare earth doped Ca2Si5N8 persistent luminescence nanoparticles" T. Maldiney et al., Optical Materials Express Vol. 2, no. 3, pages 261-268 (2012), describes the use in bio-imaging of the compound $Ca_2Si_5N_8$ doped with $Eu^{2+}$ and $Tm^{3+}$ ions.

In the systems described in these publications, the electronic decay at the basis of the luminescence phenomenon is thermally stimulated, so that the persistence and intensity of the signal depend on the system temperature; this feature complicates the correlations between measurements made at different times, and especially between measurements made in vitro and in vivo, useful in order to obtain diagnostic information.

The object of the present invention is to provide photoluminescent materials with emission in the near infrared, and whose emission response is independent of the system temperature.

## Summary of the invention

In a first aspect thereof, the present invention relates to the photoluminescent material ytterbium-doped gadolinium oxycarbonate; this material, having the formula $Gd_{(2-x)}O_2CO_3Yb_x$ wherein x is between 0.002 and 0.08, has an intense persistent emission centered around 967 nm, detectable even after 16 hours.
In a second aspect thereof, the invention relates to methods of preparation of the above photoluminescent material.

## Brief description of the figures

- Figure 1 shows an X-ray diffractogram of a material of the invention with x equal to 0.08;
- Figure 2 shows the emission spectrum of a material of the invention with x equal to 0.02;
- Figure 3 shows the trend of the emission yield of the materials of the invention upon variation of the degree of substitution of gadolinium with ytterbium;
- Figure 4 shows a graph which shows the persistent luminescence intensity of a material of the invention as a function of time and the theoretical curve expected for a luminescence emission not dependent on temperature;
- Figure 5 shows three graphs of the intensity of persistent luminescence of a material of the invention as a function of time obtained at different temperatures;

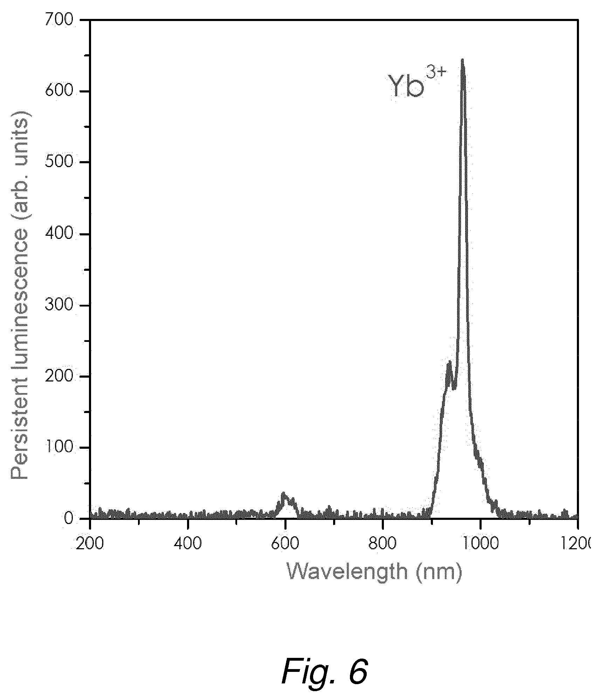

- Figure 6 shows the persistent luminescence spectrum of a material of the invention screened by a culture of Escherichia coli.

## Detailed description of the invention

The material of the invention is gadolinium oxycarbonate, in which gadolinium is substituted with ytterbium with substitution percentages ranging between 0.1 and 4%, equivalent to values of x in the formula $Gd_{(2-x)}O_2CO_3Yb_x$ between 0.002 and 0.08.

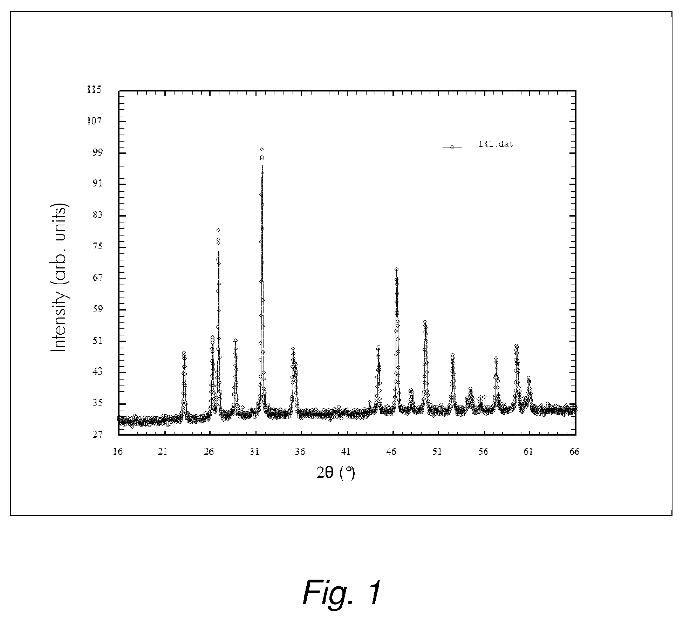

Figure 1 shows a spectrum of diffraction of powders obtained with a Philips PW1830 instrument, with incident radiation of wavelength $\lambda = 1.5406$ Å and with scan speed 0.5°/min. The spectrum of the figure was obtained on a sample with x equal to 0.08, i.e. the maximum substitution value of Gd with Yb according to the invention. This spectrum is representative of all possible materials of the invention, since for substitution percentages of Gd with Yb below 5% the minimum variations of the size of the elementary cell are not detectable by the XRD technique.
The inventors have observed that the material of the invention has a persistent luminescence intensity yield as a function of time whose pattern is represented by the equation (1):

$$I = \frac{A}{(t-C)} + y_0 \tag{1}$$

wherein:

I   is the intensity of emission;
A   is a proportionality constant that takes into account the contributions of the emission intensity and the detector efficiency;
t   is the time elapsed since the end of the excitation;
C   is an empirical constant;
$y_0$   is the value of the background signal.

As can be seen from equation (1), the intensity of emission from the materials of the invention is not a function of temperature. This time dependence of the persistent luminescence intensity can be due to either a recombination mechanism for athermal tunnel effect or to the presence of trap levels with a continuous distribution of energies.
In a second aspect thereof, the invention relates to the methods of preparation of the material of the invention.
The preparation of the material can occur through different syntheses, which generally utilize as starting material homogeneous mixtures of oxalates of gadolinium and ytterbium in the desired ratios.
These mixtures may be obtained by co-precipitation starting from the oxides of the elements, preferably in powder form, which are solubilized by acidic solutions; to this end, a solution of cold HCl may be used. The solution thus obtained is added with a solution of oxalic acid in excess as a precipitating agent. Considering that the solubility products of trivalent rare earth oxalates are very close to each other (in the order of $10^{-30}$), their precipitation is essentially simultaneous, leading to a homogeneous mixed oxalate; in the tests carried out by the inventors, this homogeneity was confirmed by an analysis of the distribution of the cations with the X-rays dispersion technique in an electronic microscope equipped with a suitable probe (a well-known technique in the field of materials with the acronym SEM-EDXS). The product thus obtained is generally filtered, washed with water and then dried in an oven.

A first way of synthesis of the material of the invention consists in the treatment of the mixture of oxalates in a horizontal oven in air, for example at 600 °C for 6 hours, to obtain the corresponding mixed oxide. The latter is then added to a mixture of salts having composition, in molar fractions, 0.476 $Li_2CO_3$ - 0.270 $Na_2CO_3$ - 0.254 $K_2CO_3$; this mixture constitutes an eutectic which melts at about 500 °C; the mixed oxide of gadolinium and ytterbium is added to this mixture in an amount of about 1 g per 150 mg of said mixture. The system is then brought to a temperature higher than the melting point of the eutectic, and preferably such that the melt is sufficiently fluid, for example to 600 °C; a stream of $CO_2$ is passed in the melt, for example for 12 hours, which determines the partial re-carbonation of the oxide to give the gadolinium and ytterbium oxycarbonate. The compound obtained is then washed with water in an ultrasonic bath and filtered in order to eliminate the mixture of carbonates which is soluble in water unlike the desired material.

An alternative method is the treatment of the mixture of oxalates obtained as described above with static $CO_2$, for example at 600 °C for at least 5 days.

A last possible method of synthesis of the material of the invention consists in the thermal decomposition of the oxalates in a closed reactor under an inert atmosphere, for example of $N_2$; the thermal decomposition can be made to occur, for example, at a temperature of 700 °C, according to a process similar to that described in "Synthesis of New Red-Emitting Single-Phase Europium Oxycarbonate" by V. G. Pol et al., Inorganic Chemistry, Vol. 48, No. 12 (2009), pages 5569-5573.

The present invention will be further described by the following examples.

## Example 1

This example refers to the preparation of the oxycarbonate $Gd_{1.994}O_2CO_3Yb_{0.006}$. 36.25 g of $Gd_2O_3$ (0.1 mol) and 0.119 g of $Yb_2O_3$ ($3 \times 10^{-4}$ mol) are dissolved in 500 cc of a solution of HCl at 13% by weight, 500 cc of a solution of oxalic acid at 15% by weight are added to this solution, observing the formation of a precipitate which is filtered on Buchner and washed thoroughly with water and finally dried in oven at 80 °C for 2 hours. The powder thus obtained is treated at 600 °C for 6 hours in horizontal oven in air, obtaining a mixture of oxides of gadolinium and ytterbium with quantitative yield with respect to the starting oxides. The mixture of oxides is added to approximately 5.5 g of the eutectic mixture of carbonates $Li_2CO_3$ - $Na_2CO_3$ - $K_2CO_3$ and the system is brought to 600 °C in a stream of $CO_2$ for 12 hours. At the end of the thermal cycle, the material obtained is immersed in water, treated with ultrasounds and then centrifuged, recovering the desired material after evaporation of the residual moisture; the product thus obtained constitutes Sample 1. An XRD measurement is carried out on this sample, obtaining the diffraction spectrum shown in Figure 1.

## Example 2

Following the procedure of Example 1, starting using again 36.25 g of $Gd_2O_3$ (0.1 mol) and different amounts of $Yb_2O_3$, three samples are prepared with different degree of substitution of Gd with Yb, as summarized in the following table:

**Table 1**

| Sample | Initial $Yb_2O_3$ weight (g) | Initial $Yb_2O_3$ moles | Compound formula |
|--------|------------------------------|--------------------------|-------------------|
| 2 | 0.398 | $1 \times 10^{-3}$ | $Gd_{1.98}O_2CO_3Yb_{0.02}$ |
| 3 | 1.219 | $3.1 \times 10^{-3}$ | $Gd_{1.94}O_2CO_3Yb_{0.06}$ |
| 4 | 1.642 | $4.2 \times 10^{-3}$ | $Gd_{1.92}O_2CO_2Yb_{0.08}$ |

XRD measurements are performed on samples 2, 3 and 4 thus prepared, obtaining in all cases a diffraction spectrum corresponding to that in Figure 1.

## Example 3

0.1 g of sample 2 are suspended in 1 l of aqueous solution of NaCl having a concentration of 9 g/l and the suspension is subjected to ultrasonic treatment for 10 minutes to break up any aggregates of powder and evenly disperse it in the solvent, so to obtain a homogeneous suspension of the powder sample. 2 ml of this suspension are deposited on a glass slide, and the solvent is allowed to evaporate, obtaining a dry powder.

The powder sample is placed in a sample holder, pressing it in a circular recess with 5 mm diameter and 1 mm deep.

The stimulation of the persistent luminescence (PeL) is carried out using a Philips 2274 X-ray tube with tungsten target, powered with 20 kV and 20 mA. The emission spectrum of the sample is then recorded, measuring the intensity of the persistent luminescence signal that is evaluated by integrating the spectrum in the emission region of the Yb (between 880 and 1050 nm) and then normalized by dividing by the measurement integration time. The detection system consists of a monochromator Triax 180 Jobin-Yvon (using a grating with 100 lines/mm and a slit width of 0.25 mm) coupled to a CCD Spectrum One 3000 Jobin-Yvon backlit sensor cooled with liquid nitrogen.

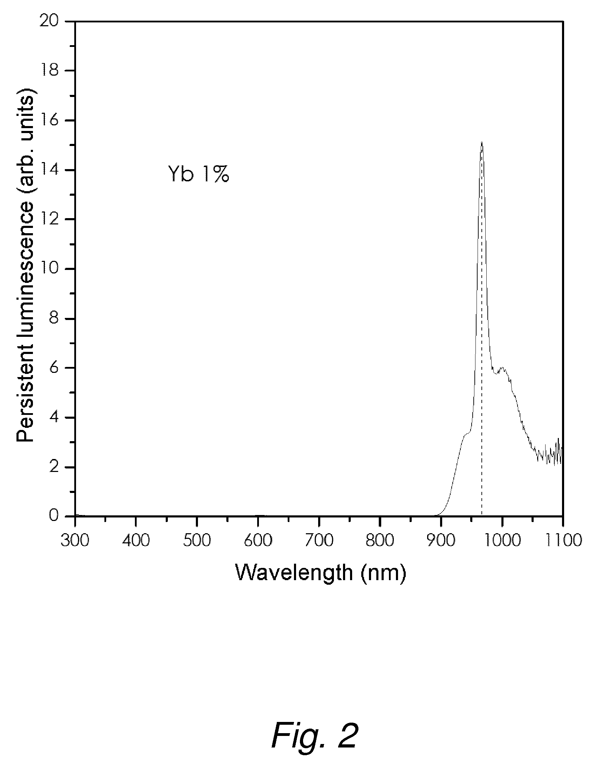

The spectrum thus obtained, shown in Figure 2, shows an intense emission peak centered at about 970 nm.

## Example 4

Samples 1-4 produced as described in examples 1 and 2 are subjected to ionizing radiation (X-rays) to stimulate the persistent luminescence.

The samples are prepared and irradiated with X-rays as described in the previous example. Starting from the moment the radiation is interrupted, persistent luminescence spectra are acquired at regular intervals using the same detection system used in the previous measurement. The measurement integration time is 30 s and the luminescence intensity is monitored for about 30 minutes. The spectra are normalized by dividing the luminescence width by the integration time in order to make the different spectra comparable.

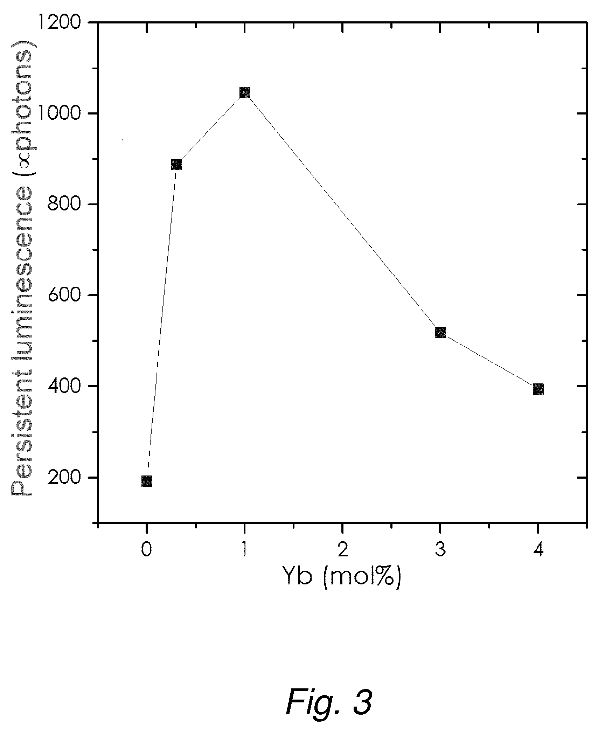

The results of these measurements are plotted in Figure 3; the graph also shows the value measured as described above for a compound nominally not containing Yb; the weak luminescence observed is due to traces of Yb still present in the sample. The Figure shows that the material with the best luminescence yield is the one with the percentage of substitution of Gd with Yb equal to 1% (x = 0.02).

## Example 5

A measurement of the luminescence persistence after the interruption of the excitation is made on sample 2 (using X-rays).

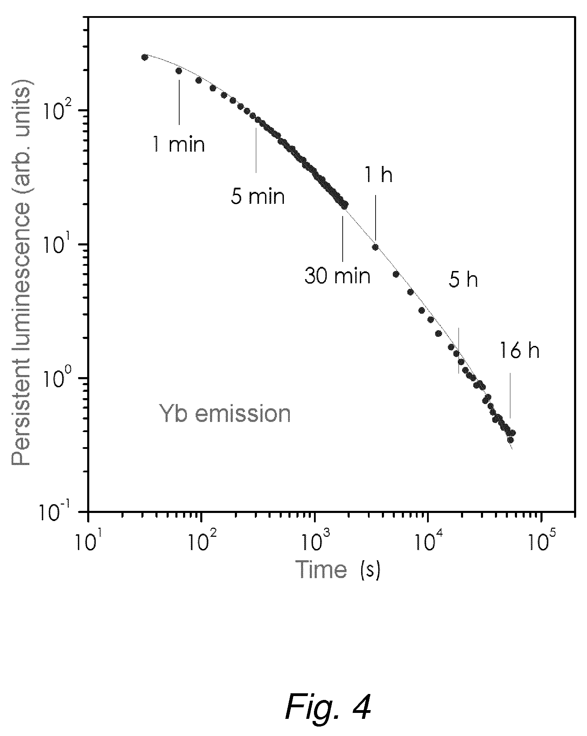

The procedure is as described in example 4, but in this case by recording the luminescence over time, initially every 30 seconds after the interruption of the excitation (up to 30 minutes from the beginning of the test) and then every 30 minutes until the emission is virtually over, integrating for 240 s. Also in this case, the spectra are normalized by dividing the luminescence width by the measurement integration time. The test results are plotted in double logarithmic scale in Figure 4, together with the theoretical calculated curve, using equation 1 above. As can be seen, the values obtained in the measurement replicate almost exactly those expected from the calculation.

## Example 6

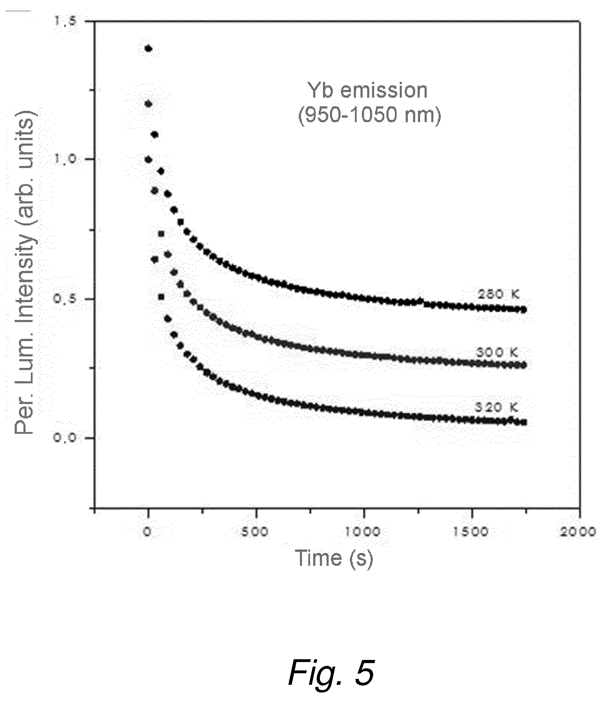

Example 5 is repeated three times at three different temperatures (280 K, 300 K and 320 K), measuring the luminescence at intervals of 30 s and performing tests of the duration of 30 minutes. The results of the three tests are shown in linear scale in Figure 5; the graphs for the three measurements are staggered in the figure to highlight them, since they are almost exactly superimposed. These measurements show that the decay of the intensity of persistent luminescence does not depend on temperature.

## Example 7

Sample 2 is used in a persistent luminescence test in a biological sample (a culture of Escherichia coli).

Escherichia coli is inoculated at 37 °C for 24 hours in 50 ml of LB broth (the standard liquid medium used for this method). After 24 hours of incubation, the material is centrifuged for 10 minutes at 5000 RPM, the supernatant liquid is removed and the bacterial pallet is suspended in sterile saline (solution of NaCl 9 g/l); the operation is repeated 3 times.

The absorbance of the solution is measured in a spectrophotometer (wavelength 600 nm), by correlating the value to the number of colony forming units (CFU) present in the sample through the following equation: 1 abs = $10^7$ CFU.

The sample is prepared in falcon tube as follows: 20 ml solution of E. coli are added to 20 ml of the oxycarbonate suspension of example 3; the initial concentration of bacteria is approximately 994 x $10^4$ CFU.

It is brought to a volume of 100 ml with LB and inoculated for 24 hours at 37 °C. The sample is then centrifuged and re-suspended in saline, then the slides for optical measurements are prepared by depositing 2 ml of sample and letting the liquid fraction evaporate.

Two controls are also prepared, the first (white negative) corresponding to the suspension of only oxycarbonate of example 3, and the second (white positive) without oxycarbonate, thus containing only the bacterial load.

Luminescence measurements are carried out as described in example 3 on the sample and on the two controls, with the following results:

- the white positive sample has no signal;
- the white negative sample has a signal with the emission peak at about 970 nm, confirming the result shown in Figure 2;
- the sample containing both the phosphorus of the invention and the bacterial load, which has an absorbance of 1.889 abs which corresponds to $1.889 \times 10^7$ CFU; the emission spectrum of this sample, shown in Figure 5, highlights both the peak of ytterbium, slightly attenuated compared to the white, and a weak peak around 600 nm which is typical of bacteria, corresponding to the radiation typically emitted by the bacteria following the absorption of a radiation.

**Claims**

1. Luminescent compound with long persistence of luminescence having formula $Gd_{(2-x)}O_2CO_3Yb_x$, wherein x is between 0.002 and 0.08.

2. Compound according to claim 1, wherein x is greater than 0.006.

3. Compound according to claim 2, wherein x is 0.02.

4. Process for the preparation of a compound according to any one of claims 1 to 3, which comprises the following steps:

   a) obtaining a homogeneous mixture of oxalates of gadolinium and ytterbium in the desired ratio;
   b) subjecting the mixture of oxalates to heat treatment to decompose said oxalates and obtain a mixed oxide;
   c) adding said mixed oxide to a mixture of salts having composition, in molar fractions, 0.476 $Li_2CO_3$ - 0.270 $Na_2CO_3$ - 0.254 $K_2CO_3$;
   d) subjecting said oxide and salts to a heat treatment at a temperature higher than the melting point of the mixture of salts, while flowing $CO_2$ through the melt;
   e) allowing the melt to solidify;
   f) washing with water the resulting solid and filtering, and recover the compound of formula $Gd_{(2-x)}O_2CO_3Yb_x$.

5. Process according to claim 4, wherein in step b) the mixture of oxalates is decomposed by thermal treatment in air at 600 °C for 6 hours.

6. Process according to any one of claims 4 or 5, wherein in step c) said mixed oxide is added to the mixture of salts in a weight ratio 1:0.15.

7. Process according to any one of claims 4 to 6, wherein in step d) the mixture of mixed oxide and salts is treated at 600 °C for 12 hours.

8. Process for the preparation of a compound according to any one of claims 1 to 3, consisting in treating a homogeneous mixture of oxalates of gadolinium and ytterbium in the desired ratio with static $CO_2$ at a temperature of at least 600 °C.

9. Process for the preparation of a compound according to any one of claims 1 to 3, consisting in the thermal decomposition of a homogeneous mixture of oxalates of gadolinium and ytterbium in the desired ratio in a closed reactor under an inert atmosphere at a temperature of at least 700 °C.

10. Process according to any one of claims 4 to 9, in which the initial mixture of oxalates is obtained by dissolution in acid solution of gadolinium oxide and ytterbium oxide in the desired ratio, addition of oxalic acid to the solution thus obtained, and recovery of the precipitated oxalates.

**Patentansprüche**

1. Lumineszente Verbindung mit langer Dauer der Lumineszenz, mit der Formel $Gd_{(2-x)}O_2CO_3Yb_x$, worin x zwischen 0,002 und 0,08 ist.

2. Verbindung nach Anspruch 1, worin x größer als 0,006 ist.

3. Verbindung nach Anspruch 2, worin x 0,02 ist.

4. Verfahren zur Herstellung einer Verbindung nach irgendeinem der Ansprüche 1 bis 3, welches die folgenden Schritte umfasst:

   a) Erhalten einer homogenen Mischung von Oxalaten von Gadolinium und Ytterbium in dem gewünschten Verhältnis;
   b) Unterwerfen der Mischung aus Oxalaten einer Hitzebehandlung zum Zersetzen der Oxalate und Erhalten eines Mischoxids;
   c) Zusetzen des Mischoxids zu einer Mischung aus Salzen, die die Zusammensetzung (in molaren Bruchteilen) aufweist: 0,476 $Li_2CO_3$ - 0,270 $Na_2CO_3$ - 0,254 $K_2CO_3$;
   d) Unterwerfen des Oxids und der Salze einer Hitzebehandlung bei einer Temperatur über dem Schmelzpunkt der Mischung von Salzen, während man $CO_2$ durch die Schmelze strömen lässt;
   e) Verfestigenlassen der Schmelze;
   f) Waschen des resultierenden Feststoffs mit Wasser und Filtern und Gewinnen der Substanz der Formel $Gd_{(2-x)}O_2CO_3Yb_x$.

5. Verfahren nach Anspruch 4, wobei in Schritt (b) die Mischung von Oxalaten zersetzt wird durch thermische Behandlung an der Luft bei 600 °C für 6 Stunden.

6. Verfahren nach irgendeinem der Ansprüche 4 oder 5, wobei in Schritt (c) das Mischoxid der Mischung von Salzen in einem Gewichtsverhältnis von 1 : 0,15 zugesetzt wird.

7. Verfahren nach irgendeinem der Ansprüche 4 bis 6, wobei in Schritt (d) die Mischung des Mischoxids und der Salze behandelt wird bei 600 °C für 12 Stunden.

8. Verfahren für die Herstellung einer Verbindung nach irgendeinem der Ansprüche 1 bis 3, bestehend in einem Behandeln einer homogenen Mischung von Oxalaten von Gadolinium und Ytterbium in dem gewünschten Verhältnis mit statischem $CO_2$ bei einer Temperatur von wenigstens 600 °C.

9. Verfahren für die Herstellung einer Verbindung nach irgendeinem der Ansprüche 1 bis 3, bestehend in der thermischen Zersetzung einer homogenen Mischung von Oxalaten von Gadolinium und Ytterbium in dem gewünschten Verhältnis in einem geschlossenen Reaktor unter einer Inertgas-Atmosphäre bei einer Temperatur von wenigstens 700 °C.

10. Verfahren nach irgendeinem der Ansprüche 4 bis 9, in dem die anfängliche Mischung von Oxalaten erhalten wird durch Lösen von Gadoliniumoxid und Ytterbiumoxid in dem gewünschten Verhältnis in Säure-Lösung, Zusetzen von Oxalsäure zu der so erhaltenen Lösung und Gewinnen der gefällten Oxalate.

**Revendications**

1. Composé luminescent doté d'une longue persistance de luminescence, ayant la formule $Gd_{(2-x)}O_2CO_3Yb_x$, dans lequel x est compris entre 0,002 et 0,08.

2. Composé selon la revendication 1, dans lequel x est supérieur à 0,006.

3. Composé selon la revendication 2, dans lequel x est égal à 0,02.

4. Procédé de préparation d'un composé selon l'une quelconque des revendications 1 à 3, qui comprend les étapes suivantes consistant à :

a) obtenir un mélange homogène d'oxalates de gadolinium et d'ytterbium selon le rapport souhaité ;

b) soumettre le mélange d'oxalates à un traitement thermique pour décomposer lesdits oxalates et obtenir un oxyde mixte ;

c) ajouter ledit oxyde mixte à un mélange de sels ayant la composition, en fractions molaires, 0,476 $Li_2CO_3$-0, 270 $Na_2CO_3$-0,254 $K_2CO_3$ ;

d) soumettre ledit oxyde et lesdits sels à un traitement thermique à une température supérieure au point de fusion du mélange de sels, tout en faisant circuler du $CO_2$ à travers le produit de fusion ;

e) laisser le produit de fusion se solidifier ;

f) laver à l'eau la matière solide résultante et filrter, et de récupérer le composé de formule $Gd_{(2-x)}O_2CO_3Yb_x$.

5. Procédé selon la revendication 4, dans lequel, à l'étape b), le mélange des oxalates est décomposé par traitement thermique dans de l'air à 600°C pendant 6 heures.

6. Procédé selon la revendication 4 ou 5, dans lequel, à l'étape c), ledit oxyde mixte est ajouté au mélange de sels selon un rapport pondéral 1 : 0,15.

7. Procédé selon l'une quelconque des revendications 4 à 6, dans lequel, à l'étape d), le mélange d'oxyde mixte et de sels est traité à 600°C pendant 12 heures.

8. Procédé de préparation d'un composé selon l'une quelconque des revendications 1 à 3, consistant à traiter un mélange homogène d'oxalates de gadolinium et d'ytterbium, selon le rapport désiré, avec du $CO_2$ statique à une température d'au moins 600°C.

9. Procédé de préparation d'un composé selon l'une quelconque des revendications 1 à 3, consistant en la décomposition thermique d'un mélange homogène d'oxalates de gadolinium et d'ytterbium, selon le rapport souhaité, dans un réacteur fermé sous une atmosphère inerte à une température d'au moins 700°C.

10. Procédé selon l'une quelconque des revendications 4 à 9, dans lequel le mélange initial d'oxalates est obtenu par la dissolution dans une solution acide d'oxyde de gadolinium et d'oxyde d'ytterbium, selon le rapport souhaité, l'addition d'acide oxalique à la solution ainsi obtenue, et la récupération des oxalates précipités.

*Fig. 1*

*Fig. 2*

*Fig. 3*

*Fig. 4*

*Fig. 5*

*Fig. 6*

**EP 2 811 002 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120258048 A1
- WO 2008022147 A1
- WO 2010075003 A1

**Non-patent literature cited in the description**

- **POL et al.** *Inorg. Chem.,* 2009, vol. 48, 5569-5573
- **R. OSAKI et al.** *Proceedings of the IEEE SENSORS,* 2011, 1784-1787
- **T. MALDINEY et al.** In vivo optical imaging with rare earth doped Ca2Si5N8 persistent luminescence nanoparticles. *Optical Materials Express,* 2012, vol. 2 (3), 261-268
- **V. G. POL et al.** Synthesis of New Red-Emitting Single-Phase Europium Oxycarbonate. *Inorganic Chemistry,* 2009, vol. 48 (12), 5569-5573